Europäisches Patentamt

European Patent Office

Office européen des brevets

(19)

(11) Veröffentlichungsnummer: **0 255 873**
**A2**

(12) **EUROPÄISCHE PATENTANMELDUNG**

(21) Anmeldenummer: 87109775.4

(51) Int. Cl.⁴: **B60J 7/04**

(22) Anmeldetag: 07.07.87

(30) Priorität: 02.08.86 DE 3626299

(43) Veröffentlichungstag der Anmeldung:
17.02.88 Patentblatt 88/07

(84) Benannte Vertragsstaaten:
DE FR GB NL SE

(71) Anmelder: Webasto-Werk W.Baier GmbH &
Co.
Kraillinger Strasse 5
D-8035 Stockdorf(DE)

(72) Erfinder: Igel, Richard
Luitpoldstrasse 12
D-8034 Germering(DE)
Erfinder: Schleicher, Bernd
Prinzenstrasse 47
D-8000 München 19(DE)

(54) **Vorrichtung zum Einstellen und Fixieren der Höhenlage eines Deckels eines Fahrzeugdaches.**

(57) Vorrichtung zum Einstellen und Fixieren der Höhenlage eines dem wahlweisen Verschließen und Freigeben eines Dachausschnittes einer festen Fahrzeugdachfläche dienenden Deckels gegenüber dieser Dachfläche, mit einem den Deckel über eine Deckelbetätigungseinrichtung tragenden Führungsrahmen, der unter einem an der Dachfläche befestigten Verstärkungsteil angeordnet und mit diesem über Schraubglieder höhenverstellbar verbunden ist, deren Achse lotrecht oder nahezu lotrecht verläuft. Die Schraubglieder weisen jeweils eine an dem Führungsrahmen angebrachte Gewindebuchse mit durchgehender Gewindeöffnung, eine mit einer Durchgangsbohrung versehene, in die Gewindebuchse eingeschraubte Einstellschraube, die sich mit ihrem aus der Gewindebuchse nach oben vorstehenden Ende an der Unterseite des Verstärkungsteils abstützt, und eine in die Einstellschraube eingesteckte Befestigungsschraube auf, deren aus der Einstellschraube nach oben vorstehendes Ende in eine Gewindebohrung des Verstärkungsteils eingeschraubt ist. Die Einstellschraube und die Befestigungsschraube sind zum Verstellen von unten ausgebildet.

FIG. 2

## Vorrichtung zum Einstellen und Fixieren der Höhenlage eines Deckels eines Fahrzeugdaches

Die Erfindung bezieht sich auf eine Vorrichtung zum Einstellen und Fixieren der Höhenlage eines dem wahlweisen Verschließen und mindestens teilweisen Freigeben eines Dachausschnitts einer festen Dachfläche eines Fahrzeugs dienenden Deckels gegenüber der festen Dachfläche, mit einem den Deckel über eine Deckelbetätigungseinrichtung tragenden Führungsrahmen, der unter mindestens einem an der festen Dachfläche befestigten Verstärkungsteil angeordnet und mit diesem über Schraubglieder höhenverstellbar verbunden ist, deren Achse lotrecht oder nahezu lotrecht verläuft.

Bei einer bekannten Vorrichtung dieser Art (DE-AS 11 61 155) umfassen die Schraubglieder jeweils eine auf dem Verstärkungsteil sitzende Mutter, in die von unten eine Schraube eingeschraubt wird, die entsprechende Durchgangslöcher des Führungsrahmens und des Verstärkungsteils durchgreift und auf die zwischen dem Führungsrahmen und dem Verstärkungsteil Distanzscheiben in der jeweils erforderlichen Anzahl und/oder Dicke aufgesteckt werden, um die Höhenlage des Deckels an die feste Dachfläche anzugleichen. Bei der bekannten Vorrichtung gestaltet sich die Höheneinstellung des Deckels relativ arbeits- und zeitaufwendig, da ausprobiert oder ausgemessen werden muß, wieviele Distanzscheiben jeweils notwendig sind, und da diese Distanzscheiben dann in umständlicher Weise zwischen den Führungsrahmen und das Verstärkungsteil eingebracht werden müssen. Es ist auch bekannt (DE-PS 949 446), bei einem Fahrzeugschiebedach einen den Dachausschnitt umgreifenden Regenrinnenrahmen an einem an der festen Dachfläche befestigten Dachverstärkungsrahmen in der Weise höheneinstellbar anzuordnen, daß aneinander anliegende, lotrecht verlaufende Streifen des Regenrinnenrahmens und des Dachverstärkungsrahmens mit Langlöchern versehen sind, deren längere Abmessung in lotrechter Richtung verläuft und durch die eine Klemmschraube gesteckt ist. Auf die Klemmschraube ist eine Flügelmutter aufgeschraubt, durch deren Anziehen die Streifen in Klemmeingriff miteinander gebracht werden. Dabei besteht jedoch die Gefahr, daß sich die Klemmverbindungen lockern. Infolgedessen sind diese bei der bekannten Vorrichtung nur als Montagehilfe vorgesehen, und der Regenrinnenrahmen wird dort nach der Höheneinstellung mit dem Dachverstärkungsrahmen zusätzlich punktverschweißt, verschraubt oder vernietet. Hinzu kommt, daß die vorerwähnten bekannten Vorrichtungen nicht für eine Robotermontage eines Schiebe-, Hebe-, Schiebehebedaches oder dergleichen in der Fahrzeugkarosserie geeignet sind.

Der im Anspruch 1 angegebenen Erfindung liegt die Aufgabe zugrunde, eine Vorrichtung der eingangs genannten Art zu schaffen, welche die Montage und Höheneinstellung weiter vereinfacht und auch für eine Robotermontage geeignet ist.

Diese Aufgabe wird erfindungsgemäß dadurch gelöst, daß die Schraubglieder jeweils eine an dem Führungsrahmen angebrachte Gewindebuchse mit durchgehender Gewindeöffnung, eine mit einer Durchgangsbohrung versehene , in die Gewindeöffnung der Gewindebuchse eingeschraubte Einstellschraube, die sich mit ihrem aus der Gewindebuchse nach oben vorstehenden oberen Ende an der Unterseite des Verstärkungsteils abstützt, und eine in die Durchgangsbohrung der Einstellschraube eingesteckte Befestigungsschraube aufweisen, deren aus der Durchgangsbohrung der Einstellschraube nach oben vorstehendes Ende in eine Gewindebohrung des Verstärkungsteils eingeschraubt ist, wobei die Einstellschraube und die Befestigungsschraube zum Verstellen von unten ausgebildet sind.

Bei der Vorrichtung nach der Erfindung erfolgt die Höheneinstellung des Führungsrahmens durch entsprechendes Verdrehen der Einstellschraube, welche den gegenseitigen Höhenabstand zwischen dem Verstärkungsteil und dem Führungsrahmen dadurch vorgibt, daß sie mit der Gewindebuchse des Führungsrahmens in Gewindeeingriff steht und sich gleichzeitig gegen die Unterseite des Verstärkungsteils anlegt. Nach erfolgter Höhenjustierung wird die Anordnung durch Anziehen der Befestigungsschraube fixiert, wobei die Befestigungsschraube gleichzeitig dem Aufhängen des Führungsrahmens an dem betreffenden Verstärkungsteil dient. Die Höhenjustierung kann genau und stufenlos vorgenommen werden. Einstell- und Befestigungsschraube sind leicht zugänglich; deshalb und auch weil keine Zusatzelemente, wie Distanzscheiben oder dergleichen, eingebracht zu werden brauchen, eignet sich die erfindungsgemäße Vorrichtung hervorragend für eine Robotermontage.

Der Höheneinstellung dienende Schraubglieder mit zusätzlicher Befestigungsschraube sind zwar aus dem DE-GM 17 64 070 bekannt. Abgesehen davon, daß diese Schraubglieder dort zwischen dachfesten Führungsschienen eines Schiebedaches und der Deckelbetätigungsvorrichtung bzw. zwischen dem Deckel und entlang den Führungsschienen verschiebbaren Gleitstücken sitzen, ist die Befestigungsschraube in eine erste Gewindebuchse eingeschraubt, die an einem der gegeneinander höhenverstellbaren Bauteile angebracht ist und auf die eine zweite Gewindebuchse aufgeschraubt ist, die sich gegen das andere der gegeneinander höhenverstellbaren Bauteile abstützt. Dabei muß zur Höhenjustierung die zweite Gewindebuchse gedreht werden. Dies ist schwierig, weil die zweite Gewindebuchse zwischen den beiden gegeneinander höhenverstellbaren Bauteilen sitzt und infolgedessen nur seitlich zugänglich ist.

Grundsätzlich können mehrere einzelne, beispielsweise bügelförmige Verstärkungsteile vorgesehen sein, die in geeigneter Weise um den Umfang des Dachausschnittes verteilt sind. Vorzugsweise ist jedoch als Verstärkungsteil in an sich bekannter Weise ein den Dachausschnitt mindestens vorne und seitlich umgreifender Dachverstärkungsrahmen vorgesehen.

Die Gewindebuchsen können zweckmäßig an einem nach außen vorspringenden Befestigungsflansch des Führungsrahmens angebracht sein. Ist der Führungsrahmen aus Kunststoff gefertigt, können, beispielsweise aus Metall bestehende, Gewindebuchsen in den Führungsrahmen bei dessen Fertigung eingebettet werden. Gegebenenfalls kann die Gewindebuchse aber auch von dem Befestigungsrahmen des Führungsflansches selbst gebildet sein.

In weiterer Ausgestaltung der Erfindung ist die Anordnung so getroffen, daß die Einstellschraube mit ihrem unteren Ende aus der Gewindebuchse nach unten vorsteht und an ihrem unteren Ende einen Kopf zum Drehen der Einstellschraube trägt. In analoger Weise kann die Befestigungsschraube mit ihrem unteren Ende aus der Durchgangsbohrung der Einstellschraube nach unten vorstehen und an ihrem unteren Ende einen Kopf zum Drehen der Befestigungsschraube tragen. Der Kopf der Einstellschraube weist vorteilhaft eine sich nach unten öffnende Ausnehmung zur mindestens teilweisen Aufnahme des Kopfes der Befestigungsschraube auf. Zweckmäßig ist eine Dichtung zur gegenseitigen Abdichtung des Führungsrahmens und des Dachverstärkungsrahmens auf der dem Dachausschnitt zugewendeten Seite der Schraubglieder angeordnet.

Ein Ausführungsbeispiel der Erfindung ist nachstehend anhand der Zeichnungen näher erläutert. Es zeigen:

Fig.1 eine schematische Draufsicht auf ein Fahrzeugdach,

Fig.2 den Schnitt entlang der Linie II-II der Fig.1 und

Fig.3 eine perspektivische, geschnittene Darstellung ähnlich Fig.2.

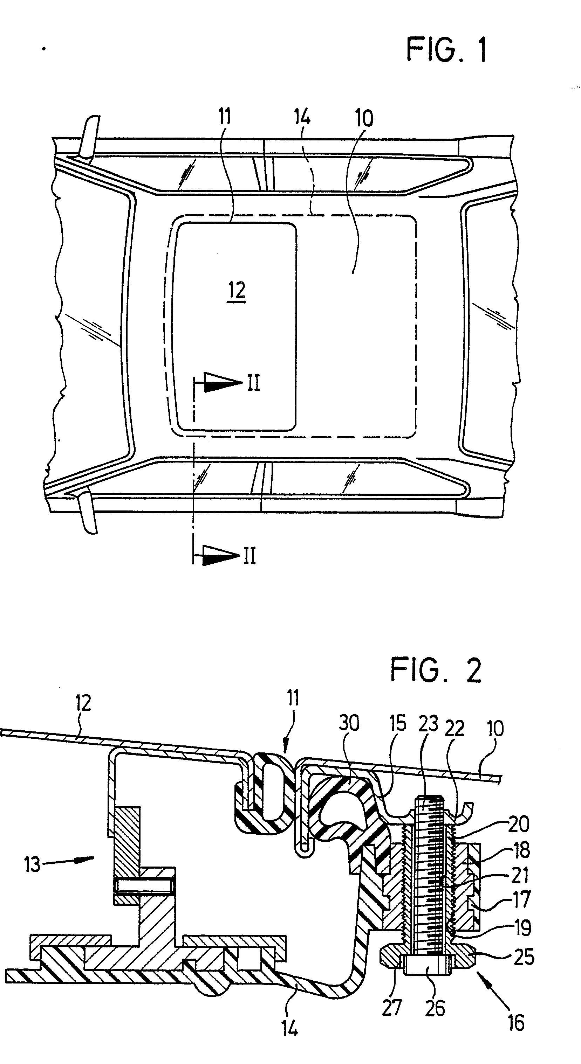

Wie dargestellt, ist in einer festen Dachfläche 10 eines Kraftfahrzeuges ein Dachausschnitt 11 vorgesehen. Der Dachausschnitt 11 kann mittels eines Deckels 12 wahlweise verschlossen oder mindestens teilweise freigelegt werden. Der Deckel 12 kann dabei in bekannter Weise Teil eines Schiebedaches, eines Hebedaches, eines Schiebehebedaches, eines Spoilerdaches, eines Lamellendaches, oder dergleichen sein. Der Deckel 12 wird von einer beliebigen Deckelbetätigungseinrichtung bekannter Art, die in Fig.2 bei 13 nur schematisch angedeutet ist, auf einem Führungsrahmen 14 abgestützt. Der Dachausschnitt 11 ist mindestens vorne und seitlich von einem unter der festen Dachfläche 10 sitzenden Dachverstärkungsrahmen 15 umgriffen, der mit der festen Dachfläche 10 beispielsweise verklebt oder punktverschweißt sein kann. Der Führungsrahmen 14 ist mit dem Dachverstärkungsrahmen 15 über insgesamt mit 16 bezeichnete Schraubglieder höhenverstellbar verbunden.

Der Führungsrahmen 14 weist einen nach außen vorspringenden Befestigungsflansch 17 auf, in den an mehreren in Umfangsrichtung verteilten Stellen Teile der Schraubglieder 16 bildende Gewindebuchsen 18 integriert, beispielsweise im Falle eines Kunststoff-Führungsrahmens in diesen eingebettet sind. Jede Gewindebuchse 18 weist eine durchgehende Gewindeöffnung 19 auf, deren Achse lotrecht oder nahezu lotrecht steht. In die Gewindeöffnung 19 ist eine Einstellschraube 20 eingeschraubt, die mit einer Durchgangsbohrung 21 versehen ist. Die Einstellschraube 20 stützt sich mit ihrem aus der Gewindebuchse 18 nach oben vorstehenden oberen Ende an der Unterseite eines Flanches 22 des Dachverstärkungsrahmens 15 ab. Der Flansch 22 liegt lotrecht in Abstand unter der festen Dachfläche 10. In die Durchgangsbohrung 21 ist eine Befestigungsschraube 23 eingesteckt. Das aus der Durchgangsbohrung 21 nach oben vorstehende Ende der Befestigungsschraube 23 steht in Schraubeingriff mit einer Gewindebohrung 24 im Flansch 22 des Dachverstärkungsrahmens 15. Die Einstellschraube 20 trägt an ihrem unteren, aus der Gewindebuchse 18 nach unten vorstehenden Ende einen Kopf 25, während das aus der Durchgangsbohrung 21 der Einstellschraube 20 nach unten vorragende Ende der Befestigungsschraube 23 mit einem Kopf 26 versehen ist. In dem Kopf 25 der Einstellschraube 20 ist eine Ausnehmung 27 ausge bildet, die sich nach unten öffnet und die den Kopf 26 der angezogenen Befestigungsschraube 23 teilweise aufnimmt (Fig.2).

Der Führungsrahmen 14 trägt auf der dem Dachausschnitt 11 zugewendeten Seite des Befestigungsflansches 17 eine Dichtung 30, die sich im fertig montierten Zustand gegen den Dachverstärkungsrahmen 15 von unten dichtend anlegt.

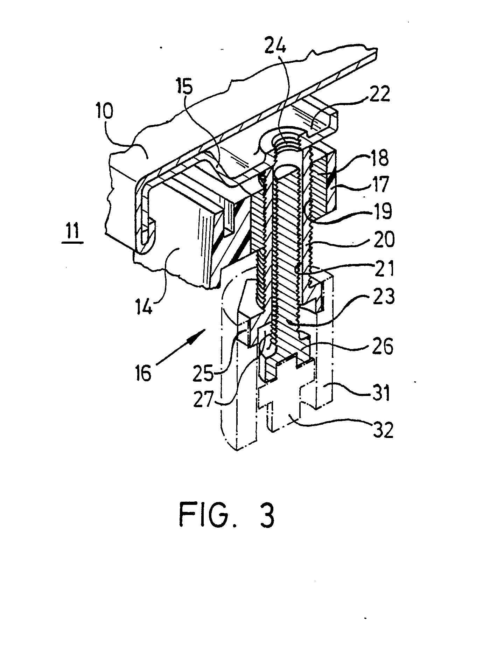

Bei Verwendung der erläuterten Höheneinstellvorrichtung können der Deckel 12 und die Deckelbetätigungseinrichtung 13 auf dem Führungsrahmen 14 fertig montiert und funktionsgeprüft sein. Im Anlieferungszustand beim Kraftfahrzeughersteller sind zweckmäßig die oberen Enden der Einstellschrauben 20 bündig mit der Oberseite der Gewindebuchsen 18 und des Befestigungsflansches 17. Zur Endmontage der aus Deckel 12, Deckelbetätigungseinrichtung 13 und Führungsrahmen 14 bestehenden Einheit im Fahrzeug kann diese Einheit beispielsweise auf Druckfedern in einer Montagevorrichtung gelagert sein, welche den Befestigungsflansch 17 des Führungsrahmens 14 gegen den Flansch 22 des Dachverstärkungsrahmens 15 anpreßt. Durch Eindrehen der Einstellschrauben 20 mittels eines in Fig.3 bei 31 angedeuteten Werkzeuges wird die gesamte Einheit gegen den Federdruck der Montagevorrichtung nach unten gedrückt.Dadurch wird der auf dem Führungsrahmen 14 montierte Deckel 12 nach unten verstellt. Nach Erreichen der Höhensollstellung des Deckels 12, beispielsweise ermittelt durch auf die feste Dachfläche 10 und den Deckel 12 aufgesetzte Meßfühler, werden mittels eines bei 32 angedeuteten Werkzeugs die Befestigungsschrauben 23 in die Gewindebohrungen 24 des Flanschs 22 des Dachverstärkungsrahmens 15 eingeschraubt. Dadurch wird die aus Deckel 12, Deckelbetätigungseinrichtung 13 und Führungsrahmen 14 bestehende Einheit mit dem Dachverstärkungsrahmen 15 verbunden. Gleichzeitig wird die Stellung der Einstellschrauben 20 fixiert.

Die geschilderten Justier-und Montagevorgänge eignen sich auch zur Durchführung mittels Robotern.

Das veranschaulichte Ausführungsbeispiel kann unter anderem in der Weise abgewandelt werden, daß der Dachverstärkungsrahmen mit Gewindebuchsen oder Muttern zur Aufnahme der Befestigungsschrauben 23 versehen ist. Gegebenenfalls können die Gewindebuchsen 18 auch unmittelbar von dem Werkstoff des Befestigungsflansches 17 gebildet sein.

**Ansprüche**

1. Vorrichtung zum Einstellen und Fixieren der Höhenlage eines dem wahlweisen Verschließen und mindestens teilweisen Freigeben eines Dachausschnittes einer festen Dachfläche eines Fahrzeugs dienenden Deckels gegenüber der festen Dachfläche, mit einem den Deckel über eine Deckelbetätigungseinrichtung tragenden Führungsrahmen, der unter mindestens einem an der festen Dachfläche befestigten Verstärkungsteil angeordnet und mit diesem über Schraubglieder höhenverstellbar verbunden ist, deren Achse lotrecht oder nahezu lotrecht verläuft, dadurch gekennzeichnet, daß die Schraubglieder (16) jeweils eine an dem Führungsrahmen (14) angebrachte Gewindebuchse (18) mit durchgehender Gewindeöffnung, eine mit einer Durchgangsbohrung (21) versehene, in die Gewindeöffnung (19) der Gewindebuchse (18) eingeschraubte Einstellschraube (20), die sich mit ihrem aus der Gewindebuchse (18) nach oben vorstehenden oberen Ende an der Unterseite des Verstärkungsteils (Dachverstärkungsrahmen 15) abstützt, und eine in die Durchgangsbohrung (21) der Einstellschraube (20) eingesteckte Befestigungsschraube (23) aufweisen, deren aus der Durchgangsbohrung (21) der Einstellschraube (20) nach oben vorstehendes Ende in eine Gewindebohrung (24) des Verstärkungsteils eingeschraubt ist, wobei die Einstellschraube (20) und die Befestigungsschraube (23) zum Verstellen von unten ausgebildet sind.

2. Vorrichtung nach Anspruch 1, dadurch gekennzeichnet, daß als Verstärkungsteil ein den Dachausschnitt (11) mindestens vorne und seitlich umgreifender Dachverstärkungsrahmen (15) vorgesehen ist.

3. Vorrichtung nach Anspruch 1 oder 2, dadurch gekennzeichnet, daß die Gewindebuchsen (18) an einem nach außen vorspringenden Befestigungsflansch (17) des Führungsrahmens (14) angebracht sind.

4. Vorrichtung nach einem der vorhergehenden Ansprüche, dadurch gekennzeichnet, daß der Führungsrahmen (14) aus Kunststoff gefertigt ist und die Gewindebuchsen (18) in den Führungsrahmen eingebettet sind.

5. Vorrichtung nach einem der vorhergehenden Ansprüche, dadurch gekennzeichnet, daß die Einstellschraube (20) mit ihrem unteren Ende aus der Gewindebuchse (18) nach unten vorsteht und an ihrem unteren Ende einen Kopf (25) zum Drehen der Einstellschraube trägt.

6. Vorrichtung nach einem der vorhergehenden Ansprüche, dadurch gekennzeichnet, daß die Befestigungsschraube (23) mit ihrem unteren Ende aus der Durchgangsbohrung (21) der Einstellschraube (20) nach unten vorsteht und an ihrem unteren Ende einen Kopf (26) zum Drehen der Befestigungsschraube trägt.

7. Vorrichtung nach Ansprüchen 5 und 6, dadurch gekennzeichnet, daß der Kopf (25) der Einstellschraube (20) eine sich nach unten öffnende Ausnehmung (27) zur mindestens teilweisen Aufnahme des Kopfes (26) der Befestigungsschraube (23) aufweist.

8. Vorrichtung nach einem der Ansprüche 2 bis 4, gekennzeichnet durch eine Dichtung (30) zur gegenseitigen Abdichtung des Führungsrahmens (14) und des Dachverstärkungsrahmens (15) auf der dem Dachausschnitt (11) zugewendeten Seite der Schraubglieder (16).

FIG. 1

FIG. 2

FIG. 3